Europäisches Patentamt

(19) European Patent Office

Office européen des brevets

(11) Publication number: **0 218 730**
**B1**

(12) EUROPEAN PATENT SPECIFICATION

(45) Date of publication of patent specification: **18.10.89**

(21) Application number: **86902495.0**

(22) Date of filing: **16.04.86**

(86) International application number:
**PCT/JP86/00190**

(87) International publication number:
**WO 86/06161 23.10.86 Gazette 86/23**

(51) Int. Cl.⁴: **G 01 G 19/32, G 01 G 13/16**

(54) COMBINATORIAL WEIGHING SYSTEM.

(30) Priority: **16.04.85 JP 55536/85 u**

(43) Date of publication of application:
**22.04.87 Bulletin 87/17**

(45) Publication of the grant of the patent:
**18.10.89 Bulletin 89/42**

(84) Designated Contracting States:
**DE FR GB**

(56) References cited:
**EP-A-0 076 108**
**EP-A-0 085 446**
**EP-A-0 127 183**
**DE-A-3 408 191**
**GB-A-2 131 963**
**US-A-4 345 858**

(73) Proprietor: **ISHIDA SCALES MFG. CO. LTD.**
**44, Shogoin Sannou-cho Sakyo-ku**
**Kyoto-shi Kyoto (JP)**

(72) Inventor: **SASHIKI, Takashi**
**10-46, Babamibashiri**
**Nagaokakyo-shi Kyoto 617 (JP)**

(74) Representative: **Skone James, Robert Edmund et al**
**GILL JENNINGS & EVERY 53-64 Chancery Lane**
**London WC2A 1HN (GB)**

Courier Press, Leamington Spa, England.

EP 0 218 730 B1

## Description

The present invention relates to a combinatorial weighing system and, more particularly, to a combinatorial weighing system which operates by distributing articles to be weighed to a plurality of weighing machines, combining the weights measured by the respective weighing machines to select an optimum added weight combination within a prescribed allowable error range, discharging the articles from the weighing machines selected to give the optimum weight combination, and collecting and conveying the discharged articles to a packaging unit.

Background art

In a circulation market such as a supermarket, as is well known in the art, there appear on the market many kinds of numerous commodities, the packaged ones of which, for example, are labelled for sale to indicate their measured weights.

The weights of those various and numerous commodities or articles should naturally be measured fully automatically and precisely. For these measurements, a variety of the so-called "combinatorial weighing systems" combining the theories of probability and statistics and the arithmetic function of a microcomputer having highly progressed in recent years are developed and adopted widely in the circulation market.

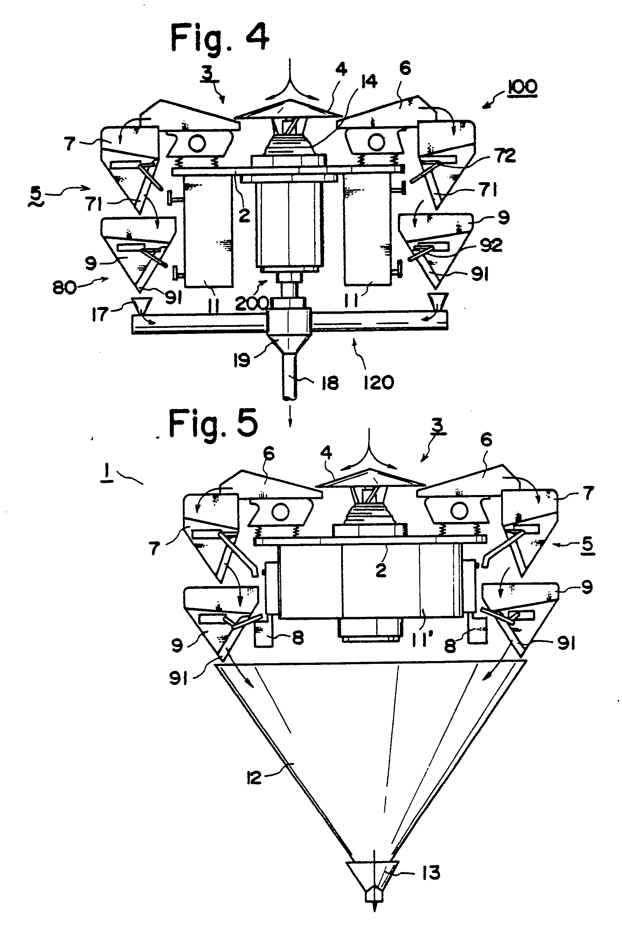

Fig. 5 is a schematic side elevation showing the combinatorial weighing system, which will be described in the following with reference to Fig. 5.

The combinatorial weighing system 1 is constructed of: a distributive or dispersive supply unit 3 composed of a distributive or dispersive table 4 arranged above the center of an upper frame 2 and a plurality of radial supply troughs 6 arranged in a circular pattern around the dispersive table 4; weighing heads 5 having a plurality of weighing machines composed of a plurality of article pooling hoppers 7 arranged in a circular pattern below the respective leading ends of the radial troughs 6, a plurality of weighing hoppers 9 arranged below the article pooling hoppers 7, respectively, and a plurality of load cells 8 supporting the weighing hoppers 9, respectively; a collection unit composed of a collection chute 12 arranged below the weighing hoppers 9, and a timing hopper 13 arranged at the lower end of the collection chute 12; and a hopper actuating unit 11' arranged on the lower side of the upper frame 2 for actuating those individual hoppers.

In the combinatorial weighing system thus constructed, the articles to be weighed or commodities are supplied onto the dispersive table 4. The commodities are then distributed or dispersed as evenly as possible to the outer circumference of the dispersive table 4 by the three-dimensional vibrations of the table 4 until they are supplied to the radial troughs 6. The commodities are then carried to the leading ends of the radial troughs 6 by the radial vibrations of the troughs 6 until they are charged onto the respectively corresponding article pooling hoppers 9 and further onto the respectively corresponding weighing hoppers 9. The load cells 8 of the weighing machines respectively supporting the weighing hoppers 9 charged with the commodities send signals indicating the weights of the charged commodities to a not-shown control unit composed of a microcomputer or the like. The not-shown control unit performs the combinatorial weighing process based on the weight signals coming from the respective weighing machines to select an optimum added weight combination which is equal to or closest to a target weight within the prescribed allowable error range, and controls the hopper actuating unit 11' thereby to open the covers 91 of the weighing hoppers 9 of the weighing machines in the combination selected. Thus, when the covers of the weighing hoppers of the weighing machines selected in the optimum combination are opened, the commodities are allowed to drop from the respective weighing hoppers 9 into the underlying collection chute 12 until they are conveyed through the timing hopper 13 to a packaging unit or the like for a subsequent step. In this meanwhile, the weighing hoppers 9 having been selected in the optimum combination to discharge the commodities are recharged with new commodities when the covers of the article pooling hoppers 7 are opened by the hopper actuating unit 11' under the control of the control unit.

In this combinational weighing system 1, the flow of the commodities to be supplied to the center of the dispersive supply unit 3 and discharged from the lowermost timing hopper 13 to the subsequent step comprises the steps of dispersing the commodities circumferentially of the dispersive table 4 to the respective weighing heads 5, combinatorially weighing the dispersed commodities circumferentially by the respective weighing hoppers 9, and collecting the weighed commodities and discharging the same. Thus, the commodities are subjected in the horizontal direction to the concentration, dispersion and collection and in the vertical direction to the downward slide by the gravity.

As a result, the commodities passing through the individual mechanisms are subjected to the horizontal distribution and collection and to the vertical sliding drop.

As shown, the combinatorial weighing system 1 has its radial troughs 6, article pooling hoppers 7 and weighing hoppers 9 arranged in the circular patterns and its actuating unit 11' arranged at the center, and the pooling hoppers 7 and the weighing hoppers 9 are equipped with not only link mechanisms for the covers 91 but also detectors, electromagnetic actuating units and so on. This imposes restrictions on reduction in the diametrical extension of the weighing system 1 so that the overall diameter of the weighing system 1 cannot but be enlarged. In order to effect a sliding speed exceeding the relative friction between the commodities and the respective mechanisms of the system, these individual mechanisms have to be slanted considerably highly. In order that especially the slanting angle of the collection chute 12 for collecting the commodities, which have been selected for the combinatorial weighing process and discharged from the individual weighing hoppers 9, to the timing hopper 13 or the subsequent packaging step may be held at a prescribed value, the collection chute 12 must be designed to have a remarkably large size, as shown.

For this design, as shown in Fig. 5, the combinatorial weighing system 1 has its center of gravity raised because the collection chute 12 disposed in the lower position is large-sized although its individual mechanisms are concentrated in the upper portion. As a result, the weighing system 1 rising above the packaging unit is encountered by a difficulty that it is highly instable. Moreover, the lower collection chute 12 has to be large-sized so that the weighing system 1 is accompanied by serious troubles in its maintenance and inspection.

Notwithstanding an earnest desire of processing the combinatorial weighing system 1 promptly, moreover, the speed dominating the prompt processing is limited by the aforementioned sliding drop of the commodities. If the timings at which the respective covers of the pooling hoppers 7 and weighing hoppers 9 are opened or closed are accelerated to the extremities of cycles so as to retain the allowable dropping speed, there arises a defect that the individual cycles of the commodities approaching are entangled below the collection chute 12. In the vicinity of the timing hopper, moreover, the commodities collide against one another to invite a disadvantage that butter peanut, for example, is broken to drop its market value.

In view of these, on the contrary, the collection chute 12 is equipped with means for dropping the sliding speed, such as a stopper or a shutter, which in turn raises another difficulty that the speediness of the combinatorial weighing system 1 is degraded. If the slanting angle of the collection chute 12 so as to descend the centre of gravity, on the other hand, this leads to another disadvantage that the commodities are not allowed to slide downward smoothly on the collection chute 12.

EP—A—0076108 discloses a combinatorial weighing system comprising a dispersive supply unit for dispersively supplying articles to be weighed; a plurality of weighing heads arranged below the dispersive supply unit and each having a hopper; a collection unit including a plurality of collection means arranged below the respective weighing heads, and having their outer ends opened to face the respective hoppers of the weighing heads; and an actuating unit for synchronously actuating the collection unit. In this apparatus the weighing heads are arranged in a row which extends diagonally to the direction in which articles are collected, each weighing head being associated with a respective row of discharge buckets linking the discharge head with a row of collecting buckets. The number of discharge buckets in each row increases by one in the direction of article collection. This is a complex system requiring the use of both discharge and collection buckets and a complicated synchronisation system.

In accordance with the present invention, a combinatorial weighing system comprises a dispersive supply unit for dispersively supplying articles to be weighed; a plurality of weighing heads arranged below the dispersive supply unit and each having a hopper; a collection unit including a plurality of collection means arranged below the respective weighing heads, and having their outer ends opened to face the respective hoppers of the weighing heads; and an actuating unit for synchronously actuating the collection unit, and is characterised by a common collection hopper connected to the inner ends of the collection means.

The present invention provides an excellent combinatorial weighing system which has its height reduced in its entirety to drop its centre of gravity, which can facilitate not only its construction and installation but also its maintenance and inspection without deteriorating its combinatorially weighing function and which can be constructed and run at a low cost so that it can benefit the weighing technical field in the circulation industry.

The combinatorial weighing system is also able to avoid mutual collisions of the commodities and to shorten the time period required for collecting the commodities in each combinatorial selecting and discharging cycle forcibly collecting the commodities having been combinatorially selected and discharged.

The combinatorial weighing system can avoid mutual collisions of the commodities and shorten the time period required for collecting the commodities in each combinatorial selecting and discharging cycle by pooling or storing a plurality of batches of the commodities, which have been combinatorially selected and discharged, upon each combinatorial selection and discharge in the course to a packing step and by forcibly collecting the commodities immediately before they are discharged to the packaging step.

Preferably, the collection means extend linearly outwardly from the collection hopper in different directions to the respective weighing heads. Typically, each of the collection means is substantially the same length.

Brief description of drawings

Figure 1 is a sectional view showing an essential portion of an example of a system according to the present invention;

Figure 2 is a top plan view showing an example of the arrangement of collection conveyors to be used in the system of Figure 1;

Figure 3 is an explanatory view showing an essential portion of one of the collection conveyors;

Figure 4 is a schematic side elevation showing the whole structure of the system of Figure 1, and

Figure 5 is a schematic side elevation showing the whole structure of a known combinatorial weighing system.

Next, the present invention will be described in detail in connection with the embodiment thereof with reference to the accompanying drawings.

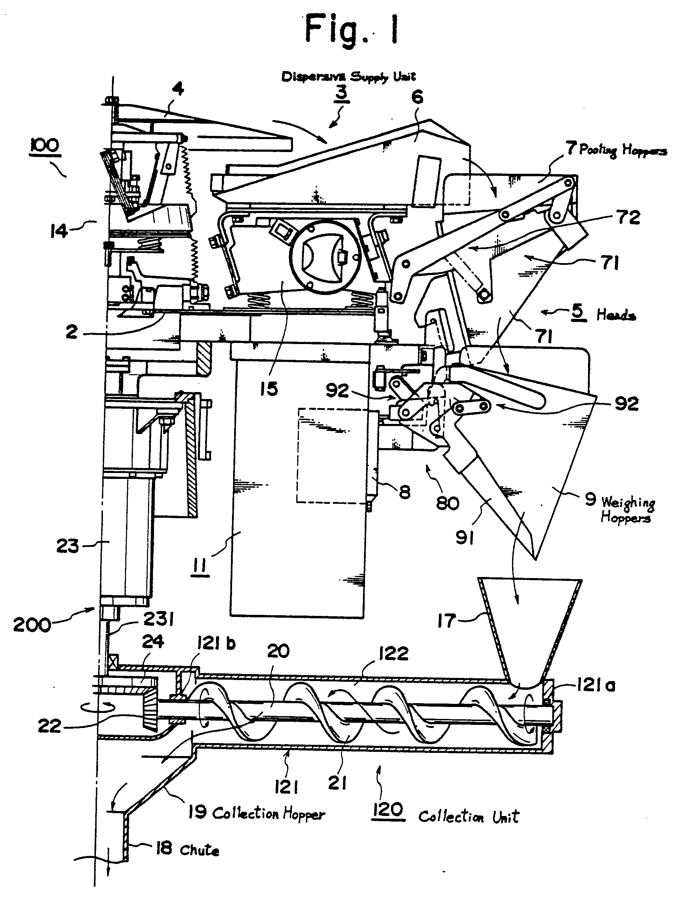

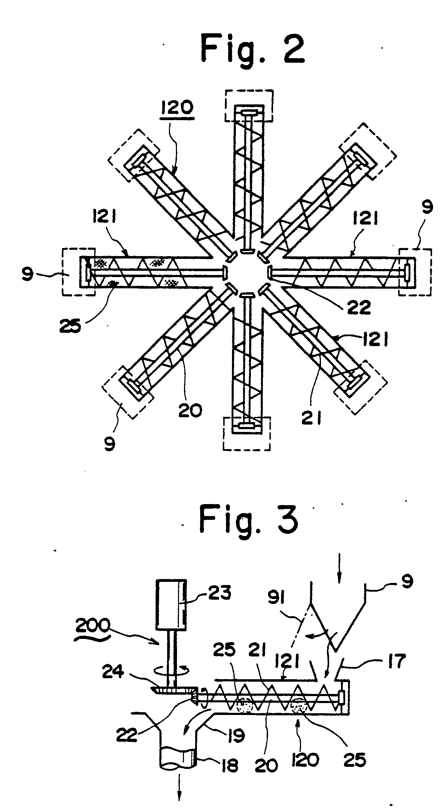

Fig. 1 is a partially sectional view showing the embodiment of the combinatorial weighing system according to the present invention; Fig. 2 is a top plan view showing an example of the arrangement of collection conveyors acting as collection means to be used in the system of the present invention; Fig. 3 is an explanatory view showing an essential portion of one of the collection conveyors; and Fig. 4 is a schematic side elevation showing the whole structure of the system of the present invention. As shown in Fig. 4, a combinatorial weighing system 100 is constructed of: a distributive or dispersive supply unit 3 composed of a distributive or dispersive table 4 arranged above an upper frame 2, and a plurality of radial supply troughs 6 arranged in a circular pattern around the dispersive table 4; and weighing heads 5 composed of a plurality of article pooling hoppers 7 arranged below the radial troughs 6, respectively, and a plurality of weighing machines 80 arranged below the article pooling hoppers 7, respectively. The dispersive table 4 is supported on the center of the upper surface of the upper frame 2 through an electromagnetic vibrator 14, which is operative to vibrate in the circumferential direction, to disperse articles to be weighed or commodities charged onto its upper surface thereby to supply the dispersed commodities to the radial troughs 6, respectively. The radial troughs 6 are supported by electromagnetic vibrators 15, respectively, to supply the commodities from the dispersive table 4 to their leading ends and further to the corresponding article pooling hoppers 7, respectively. The individual article pooling hoppers 7 release and supply the articles supplied from the respective radial troughs 6 to the corresponding weighing machines 80. Each of these weighing machines 80 is composed of a weighing hopper 9 and a load cell 8 attached to the corresponding one of later-described hopper actuating units 11 and supporting the weighing hopper 9. Each hopper actuating unit 11 is attached to the lower side of the aforementioned upper frame 2 and is controlled by a control unit composed of a not-shown microcomputer to actuate corresponding link mechanisms 92 and 72 thereby to open or close the covers 91 and 71 of the corresponding weighing hopper 9 and article pooling hopper 7, respectively.

Since the structure thus far described is substantially similar to that of the prior art shown in Fig. 5, the detail description of the combinatorial weighing system 1 will be omitted here.

Generally denoted by reference numeral 120 is a collection unit which includes collection means characterizing the present invention. More specifically, the collection unit 120 is composed of: a plurality of screw conveyors 121 acting as collection means arranged radially to correspond to the weighing hoppers 9, respectively; a plurality of guide hoppers 17 which have their lower ends fitted in the respective outer ends of the screw conveyors 121 and their upper ends opened toward the weighing hoppers 9, respectively; a collection hopper 19 connected to all the inner ends of the screw conveyors 121; a chute connected to the lower end of the collection hopper 19; and a conveyor actuating unit 200 for actuating the screw conveyors 121.

Each screw conveyor 121 is constructed of: a cylindrical casing 122 arranged generally in a horizontal position and having its inner end connected to the collection hopper 19; a spindle 20 arranged in the casing 122 and borne rotatably by bearings 121a and 121b; and a screw 21 formed integrally with the spindle 20 to have a prescribed pitch. Incidentally, the bearing 121b bearing the inner end of the spindle 20 is desirably protected by a suitable seal mechanism.

The conveyor actuating unit 200 is composed of: an electric motor 23 mounted on the center of the lower side of the upper frame 2; a sun gear 24 fixed on the drive shaft 231 of the motor 23; and a plurality of bevel gears 22 fixed on the respective inner ends of the spindles 20 of the screw conveyors 121 while respectively meshing with the sun gear 24.

In the collection unit 120 thus constructed, the eight-head screw conveyors 121 are arranged radially and equi-angularly spaced in the circumferential direction, as better seen in a top plan view from Fig. 2.

The respective spindles 20 of the screw conveyors 121 are turned synchronously and at an equal speed by the single motor 23 through the bevel gears 22 and the sun gear 24 so that the spaces between each adjacent two pitches of the respective screws 21 of the screw conveyors 121 are fed synchronously inward from the outside for all the screw conveyors 121. As a result, commodities 25, which have been weighed to the optimum combination and discharged from the weighing hoppers 9, are separated from one another between the pitches of the screws 21 and then introduced precisely either in adjoining phases or in phases spaced by several pitches depending upon the selected combination into the collection hopper 19 while being freed from any mutual mixture even they are adjacent to one another.

This limits the commodities 25, which are discharged into the central collection hopper 19 by the respective screw conveyors 121, to those which have been selected to that optimum combination and discharged from the weighing hoppers 9.

The operations of the combinatorial weighing system thus constructed according to the present embodiment will be described in the following.

When the combinatorial weighing system 100 is run into its operative state, all the mechanisms are brought into their operative states in accordance with the program. Then, the commodities such as not-shown butter peanut are dropped and supplied as continuously as possible to the dispersive table 4 which is being vibrated three-dimentionally by the vibrator 14. By the dispersive table 4, the individuul commodities are supplied in averaged amounts as much as possible to the surrounding radial troughs 6, respectively. The commodities thus supplied to the respectuve radial troughs 6 are dropped into the respective article pooling hoppers 7 from the leading ends of the corresponding radial troughs 6 being vibrated by the electromagnetic vibrators 15 until they are dropped and supplied like the mode of the prior art to the respective weighing hoppers 9 of the weighing machines 80 through the covers 71 which are to be opened or closed through the link mechanisms by the hopper actuating units 11. The weights of the commodities thus dropped into the weighing hopeprs 9 are measured by the actions of the load cells 8, which in turn send their respective measurement signals to the control unit composed of the microcomputer, as has been described hereinbefore. The control unit conducts the combinatorial weighing process based upon the measurement signals to select an optimum added weight combination which is equal to or closest to a target weight within a prescribed allowable error range, and controls the hopper actuating units 11 to open the covers 91 of the weighing hoppers 9 of the weighing machines 80 of the selected combination. The commodities 25 in the weighing hoppers 9 are dropped into the corresponding guide hoppers 17 of the scérw conveyors 121 when the weighing hoppers 9 have their covers 91 opened by the hopper actuating units 11.

When the covers 71 of the article pooling hoppers 7 corresponding to the weighing hoppers 9 having their covers 91 opened are opened, the process of dropping the commodities in the pooling hoppers 7 into the corresponding weighing hoppers 9 is similar to that of the prior art mode.

Thus, the commodities having been discharged from the weighing hoppers 9 of the weighing machines 80 selected to the optimum added weight combination as a result of the combinatorial weighing process are supplied to the inside of the casing 122 by the guide hoppers 17 fitted in the outer ends of the screw conveyors 121 so that they are supplied to the collection hopper 19 positioned at the center by the screws 21. In this case, the commodities 25 selected to the optimum weight combination are present in the spaces between the pitches of the screws 21 while being freed from being mixed into the leading or trailing space. In the phase for which the optimum weight combination has never been selected on and before the preceding operation, on the other hand, empty spaces are present between the pitches of the screws 21.

On the other hand, those commodities 25 having been selected to the optimum weight combination, which are present in the screws 21 of the individual screw conveyors 121 arranged radially, are discharged synchronously into the central collection hopper 19 by the synchronously turning screws 21, respectively, until they are supplied to the packaging unit for the subsequent step through the chute 18.

In this meanwhile, nothing but the commodities 25 selected to the optimum weight combination has to be discharged by only one step to the central collection hopper 19. Hence, the selected commodities 25 are discharged exclusively from the screw conveyors 121 and 121 having once accommodated them but not from the remaining screw conveyors 121 having the empty spaces between the pitches. This causes only the commodities having been precisely subjected to the combinatorial weighing process to be discharged.

As has been described hereinbefore, according to the present invention, the combinatorial weighing system has its collection means arranged below the weighing heads, respectively, for forcibly collecting the commodities having been combinatorially selected and discharged, so that it can be constructed to have a lower overall height. Inasmuch as this, the combinatorial weighing system has its center of gravity greatly lowered to provide an excellent effect that the system can be stabilized to have its measurements less influenced by the disturbances caused by the unnecessary vibrations while it is being run. Another excellent effect is to facilitate not only the installation and assemblage but also the maintenance and inspection of the system. An additional effect is that the cost of not only the initial cost but also the maintenance cost can be dropped.

Moreover, since the system of the present invention has its height reduced and its center of gravity dropped and is made compact, as has been described hereinbefore, it will not pick up the disturbances, even if the weighing unit such as the load cells is small-sized, to provide a further effect that the weighing accuracy can be improved. A further effect is that the excellent function of the system of having the precision despite of the compact structure can be better improved together with the speedup of the system.

In the system of the present invention, moreover, the flow of the commodities passing through the individual mechanisms of the system follows the concentration, dispersion and collection, but the vertical sliding drop is omitted at least in the lower portion of the system. As a result, the sliding drop for those commodities by the gravity, which are to be conveyed to the subsequent step instantly after they have been weighed, is largely reduced so that the commodities can be prevented from colliding against one another to provide a further effect to prevent the market value of the commodities from being dropped by the damage or the like.

In the system of the present invention, the commodities having been discharged by the weighing heads are not mixed with one another because they are separated without fail from their leading or trailing ones by using not the sliding drop but collection means such as the screw conveyors, to provide a further excellent effect that the weights of the commodities to be packaged can be measured reliably and precisely. Since the commodities selected are isolated from one another, moreover, they can conveyed at a high speed independently of the sliding drop due to the gravity to provide a further excellent effect that the efficiency of the combinatorial weighing system can be highly improved.

Since the transfer of the commodities caused by the sliding drop after the combinatorial weighing process to the subsequent step is eliminated, furthermore, an excellent effect is exhibited in improvements in the flexibility or wide use of the combinatorial weighing system. For example, it is needless, as is different from the prior art, to prepare different systems for the commodities, respectively, while considering the frictions resulting from the collection chute when the commodities of different kinds are to be weighed, and to eliminate the inconvenience that the system of the present invention cannot be elastically used for all the commodities. As a result, the system can be freely applied to any kind of commodities.

Although the present invention has been described in connection with the shown embodiment, it is quite natural that the present invention should not be limited to that embodiment. For example, the screw conveyors constructing the collection unit may be replaced by walking beam conveyors, toothed belt conveyors or pneumatic collection means. Although the collection unit may be set in the horizontal position as in the embodiment, moreover, it may be slanted uphill or downhill inward. Thus, it is possible to make free designs such as to hold the collection unit in an optimum position for the commodities or to make the overall height of the system as small as possible. It also falls within the range of design change to apply such a Teflon lining of the inner wall of the collection unit as to ensure smooth conveyance of the commodities. As the case may be, a variety of modes can be adopted including the mode of providing the collection unit with a vibrator or the mode of changing the slanting angle freely in a rocking manner.

Furthermore, each collection unit can be constructed by removing the screw 21 disposed in the screw conveyor 121 and by arranging air blow means in the vicinity of the corresponding guide hopper 17 so that the commodities dropping from the corresponding weighing hopper 9 may be abruptly blown by the air to the collection hopper 19.

If the collection unit is made to have a smaller lead pitch or radius toward the center, moreover, the commodities can be discharged while being compressed, to provide a further effect that the packaging efficiency at the subsequent step can be enhanced. A staggered dump can be conducted depending upon the design by changing that lead pitch.

Depending upon the design, moreover, the package can be charged with the compressed commodities by such an elastic design of the pitch or the like of the screws of the collection unit that the packaging unit is directly connected to the central portion of the collection unit.

Industrial applicability

The present invention can be applied not only to a combinatorial weighing system, in which the plural troughs for supplying the commodities to the weighing hoppers are arranged in the radial pattern, but also to a combinatorial weighing system of the type in which those troughs are arranged in a parallel pattern.

The present invention can also be applied to a combinatorial weighing system which can operate by temporarily pooling or storing the commodities having been weighed by weighing hoppers in article pooling hoppers, combining the weights of the commodities in the pooling hoppers to select the optimum weight combination, and discharging the commodities from the pooling hoppers.

The present invention can further be applied to weighing not only the solid articles such as butter peanut but also powdery or granular articles.

**Claims**

1. A combinatorial weighing system comprising a dispersive supply unit (3) for dispersively supplying articles to be weighed; a plurality of weighing heads (5) arranged below the dispersive supply unit (3) and each having a hopper (9); a collection unit (120) including a plurality of collection means (121) arranged below the respective weighing heads (5), and having their outer ends opened to face the respective hoppers (9) of the weighing heads; and an actuating unit (200) for synchronously actuating the collection unit characterised by a common collection hopper (19) connected to the inner ends of the collection means.

2. A system according to claim 1, wherein the collection means (121) extend linearly outwardly from the collection hopper (19) in different directions to the respective weighing heads (5).

3. A system according to claim 1 or claim 2, wherein each of the collection means (121) is substantially the same length.

4. A system accogding to any of the preceding claims, wherein the collection means (121) comprise a plurality of screw conveyors.

5. A system according to any of claims 1 to 3, wherein the collection means (121) comprise a plurality of walking beam conveyors.

6. A system according to any of claims 1 to 3, wherein the collection means (121) comprise a plurality of toothed belt conveyors.

7. A system according to any of claims 1 to 3, wherein the collection means (121) comprise a plurality of pneumatic collection means.

8. A system according to any of the preceding claims, wherein the conveyor actuating unit (200) includes: a drive motor (23); a sun gear (24) fixed on the drive shaft (231) of the drive motor (23); and a plurality of gears (22) respectively meshing with the sun gear (24) fixed on the respective drive shafts of the collection means (121) of the collection unit (120).

9. A system according to any of the preceding claims, wherein the collection unit (120) is arranged in a horizontal position.

10. A system according to any of claims 1 to 8, wherein the collection unit (120) is slanted inward.

11. A system according to any of the preceding claims, wherein each of the collection means (121) is operative to store a plurality of batches of commodities having been combinatorially selected and discharged.

### Patentansprüche

1. Kombinatorisches Wägesystem, enthaltend eine verteilende Abgebeeinheit (3) zum verteilenden Abgeben von zu wägenden Gegenstände; eine Vielzahl von Wägeköpfen (5), die unter der verteilenden Abgabeeinheit (3) angeordnet sind und jeweils einen Trichter (9) aufweisen; eine Sammeleinheit (120) mit mehreren Sammelrichtungen (121), die jeweils unter den Wägeköpfen (5) angeordnet sind und deren äußere Enden geöffnet sind, um den jeweiligen Trichtern (9) der Wägeköpfe (5) gegenüberzustehen; und eine Betätigungseinheit (200) zum synchronen Betätigen der Sammeleinheit, gekennzeichnet durch einen gemeinsamen Sammeltrichter (19), der mit den inneren Enden der Sammeleinrichtungen verbunden ist.

2. System nach Anspruch 1, bei dem die Sammeleinrichtungen (121) sich linear nach außen von dem Sammeltrichter (19) in unterschiedlichen Richtungen zu den jeweiligen Wägeköpfen (5) erstrecken.

3. System nach Anspruch 1 oder 2, bei dem jede der Sammeleinrichtungen (121) im wesentlichen die gleiche Länge hat.

4. System nach einem der vorhergehenden Ansprüche, bei dem die Sammeleinrichtungen (121) mehrere Schraubenförderer enthalten.

5. System nach einem der Ansprüche 1 bis 3, bei dem die Sammeleinrichtungen (121) mehrere Schiebestangenförderer enthalten.

6. System nach einem der Ansprüche 1 bis 3, bei dem die Sammeleinrichtungen (121) mehrere Zahnriemenförderer enthalten.

7. System nach einem der Ansprüche 1 bis 3, bei dem die Sammeleinrichtungen (121) mehrere pneumatische Sammeleinrichtungen enthalten.

8. System nach einem der vorhergehenden Ansprüche, bei dem die Förderbetätigungseinheit (200) enthält; einen Antriebsmotor (23); ein Sonnenrad (24), das auf der Antriebswelle (231) des Antriebsmotors (23) befestigt ist; und mehrere Zahnräder (22), die jeweils mit dem Sonnenrad (24) kämmen und auf den jeweiligen Antriebswellen der Sammeleinrichtungen (121) der Sammeleinheit (120) befestigt sind.

9. System nach einem der vorhergehenden Ansprüche, bei dem die Sammeleinheit (120) in einer horizontalen Position angeordnet ist.

10. System nach einem der Ansprüche 1 bis 8, bei dem die Sammeleinheit (120) nach innen geneigt ist.

11. System nach einem der vorhergehenden Ansprüche, bei dem jede der Sammeleinrichtungen (121) dazu eingerichtet ist, mehrere Ladungen von Nahrungsmitteln aufzunehmen, die kombinatorisch ausgewählt und abgegeben worden sind.

### Revendications

1. Ensemble combinatoire de pesage comprenant un ensemble (3) d'alimentation par dispersion d'articles à peser, plusieurs têtes de pesage (5) placées au-dessous de l'ensemble d'alimentation (3) par dispersion et ayant chacune une trémie (9), un ensemble collecteur (120) comportant plusieurs dispositifs collecteurs (121) placés au-dessous des têtes respectives de pesage (5) et ayant leurs extrémités externes qui débouchent en face des trémies respectives (9) des têtes de pesage, et un ensemble de manoeuvre (200) destiné à manoeuvrer en synchronisme l'ensemble collecteur, caractérisé par une trémie collectrice commune (19) connectée aux extrémités internes des dispositifs collecteurs.

2. Ensemble selon la revendication 1, dans lequel les dispositifs collecteurs (121) sont disposés sous forme rectiligne vers l'extérieur à partir de la trémie collectrice (19) dans des directions différentes, vers les têtes respectives de pesage (5).

3. Ensemble selon la revendication 1 ou 2, dans lequel tous les dispositifs collecteurs (121) ont pratiquement la même longueur.

4. Ensemble selon l'une quelconque des revendications précédentes, dans lequel les dispositifs collecteurs (121) comprennent plusieurs transporteurs à vis.

5. Ensemble selon l'une quelconque des revendications 1 à 3, dans lequel les dispositifs collecteurs (121) comportent plusieurs transporteurs à balanciers.

6. Ensemble selon l'une quelconque des revendications 1 à 3, dans lequel les dispositifs collecteurs (121) comprennent plusieurs transporteurs à courroies crantées.

7. Ensemble selon l'une quelconque des revendications 1 à,3, dans lequel les dispositifs collecteurs (121) comprennent plusieurs dispositifs collecteurs pneumatiques.

8. Ensemble selon l'une quelconque des revendications précédentes, dans lequel l'ensemble (200) de manoeuvre de transporteurs comporte un moteur (23), un pignon soleil (24) fixé à l'arbre d'entraînement (231) du moteur (23), et plusieurs pignons (22) qui sont en prise avec le pignon soleil (24) et qui sont fixés sur les arbres respectifs d'entraînement des dispositifs collecteurs (121) de l'ensemble collecteur (120).

9. Ensemble selon l'une quelconque des revendications précédentes, dans lequel l'ensemble collecteur (120) est placé en position horizontale.

10. Ensemble selon l'une quelconque des revendications 1 à 8, dans lequel l'ensemble collecteur (120) est incliné vers l'intérieur.

11. Ensemble selon l'une quelconque des revendications précédentes, dans lequel chacun des dispositifs collecteurs (121) est destiné à conserver plusieurs lots de marchandises qui ont été sélectionnés par un processus combinatoire et évacués.

# Fig. I

Dispersive Supply Unit
**3**

100

4

14

2

6

7 Pooling Hoppers

72

71

**5** Heads

71

92

92

15

8

80

91

9 Weighing Hoppers

11

23

17

200

231

24   121 b   20   122

22

121   21

200

121a

19 Collection Hopper

18 Chute

**120** Collection Unit

# Fig. 2

# Fig. 3

# Fig. 4

# Fig. 5